# EUROPEAN PATENT SPECIFICATION

(11) **EP 2 789 081 B1**
(45) Date of publication and mention of the grant of the patent: **14.09.2016**
(21) Application number: 12813488.9
(22) Date of filing: 22.11.2012
(51) Int. Cl.: H02K 16/00

(54) **ELECTRIC PROPULSION SYSTEM**
ELEKTRISCHES ANTRIEBSSYSTEM
SYSTÈME DE PROPULSION ÉLECTRIQUE

(30) Priority: 07.12.2011 IT TO20111119
(43) Date of publication of application: 15.10.2014
(73) Proprietor: Oto Melara S.p.A., 19136 La Spezia (IT)
(72) Inventor: LA SPINA, Giovanni, I-19124 La Spezia (IT); LAZZARI, Sandro, I-19136 La Spezia (IT); BELLOTTI, Carlo Felice, I-19124 La Spezia (IT)
(74) Representative: Vitillo, Giuseppe
(86) International application number: PCT/IB2012/056632
(87) International publication number: WO 2013/084101

(56) References cited:
- EP-A1- 1 641 102
- DE-C- 711 928
- US-A1- 2008 142 284

## Description

The present invention is relative to an electric propulsion system with at least two actuation shafts, which has reduced dimensions and features a high power density.

For the purpose of the present invention, the expression "power density of a propulsion system" indicates the ratio between the power that can be delivered by a propulsion system and the volume occupied by the propulsion system itself.

In order to manufacture a mechanism provided with at least two independent shafts, the choice of the most suitable propulsion system is very difficult, especially if said mechanism has to be installed in reduced spaces.

Preferably, the propulsion system comprises motors of the electric type, which guarantee a great reliability and an easy control and management.

Mechanisms are known, which comprise propulsion systems with at least two independent shafts, wherein a single electric motor is provided and there is a drive mechanism, which is adapted to transfer the motion directed at one shaft to the other shafts. This solution does not allow the different shafts to be controlled in an independent manner, since they are all controlled by the same electric motor.

Propulsion system are also known, which are adapted to control one or more independent shafts, wherein two or more independent motors are provided, preferably a motor for each shaft. Said motors are ordinary electric motors with an internal rotor and an external stator.

Said independent motors are arranged one next to the other and are kept in their position by a fixing system, for example a band or a flanged plate. This solution is very bulky and difficult to be applied, especially if the propulsion system has to be installed in small spaces.

The reduction of the space taken up by each single motor, though, can jeopardize the power that can be delivered by the motor itself and, consequently, the actuation density of the propulsion system itself.

In the field of robotics, this problem has become very real, since it is increasingly necessary to produce very small devices, which, though, have to feature different degrees of freedom in their motion. Robotized vehicles, generally known as tracked appendages, comprise a fixed structure, which supports one or more electronic and/or electromechanical devices such as sensors, video devices, audio devices, etc., and at least two tracked structures, which are adapted to move said fixed structure. Normally, said robotized vehicles are used as scout vehicles and, therefore, need to feature a high ability to move and a high drive power that allows them to get past the obstacle they meet along their path. Normally, said robotized vehicles have to allow each tracked structure to move independently of the other one and to change its position, e.g. to vary the surface of the tracked structure in contact with the ground, so as to get past the obstacles.

These movements, in the prior art, are actuated by two independent electric motors with an external stator, which are arranged one next to the other, thus taking up a large space. Furthermore, said actuators have to be connected to the mechanisms associated thereto by means of mechanical drive trains or transmissions, thus making the installation on said robotized devices more complicated.

When designing these propulsion systems, designers try not only to reduce the space occupied, but also to maximize the power density of the propulsion system itself. As mentioned above, the arrangement of the motors one close to the other occupies volumes that, otherwise, could be used to install further electronic or electromechanical devices on the robotized vehicles, so as to increase the functions of the robotized vehicle itself. Normally, given the same deliverable power, an increase in the power density leads to a reduction not only of the spaces occupied, but also of the overall weight of the propulsion system, thus causing, as a consequence, a reduction of the consumptions of the propulsion systems itself to move the robotized vehicle. The solutions of the prior art, indeed, comprise complex drive mechanisms, which are very delicate and feature a remarkable weight, but are necessary to transfer the motion generated by the motor to the device to be moved.

The need to reduce the dimensions of a propulsion system with two or more shafts applies to different technological fields, in which two or more shafts have to managed at the same time and there has to be a high control of the movements along said shafts.

It is known from the prior art document US2008142284 a double-sided dual-shaft electrical machine includes a stator disposed between the inner rotor and the outer rotor. The stator includes a plurality of inner stator coils disposed adjacent to the inner rotor for driving the inner rotor. A plurality of outer stator coals disposed adjacent to the outer rotor for driving the outer rotor.

The prior art document DE711928 discloses a motor similar to the one described in the document US2008142284 cited before.

The object of the present invention is to solve the problems mentioned above by providing a propulsion system with.at least two shafts, which has reduced dimensions and features a high power density.

This propulsion system is of the electronic type and comprises two electric motors.

An aspect of the present invention is relative to a propulsion system with at least two shafts having the features set forth in appended claim 1.

Further accessory features are set forth in the appended dependent claims.

The features and advantages of the present invention will be best understood upon perusal of the following detailed description of at least one embodiment of the propulsion system according to the present invention with reference to the accompanying drawings, which respectively illustrate what follows:
- figure 1 shows, in a prospective view, an overall image of the propulsion system according to the present invention;
- figure 2 shows an exploded view of the propulsion system of figure 1;
- figure 3 shows, in a prospective view, a non-binding application of the propulsion system according to the present invention in the field of robotics.

With reference to the figures mentioned above, the electric propulsion system with at least two shafts comprises at least two electric motors, of which at least one first motor 3 and at least one second motor 4, each one comprising a stator (S1, S2) and a rotor (R1, R2). Said propulsion system comprises, furthermore, a fixing system 5, which is adapted to lock the stators (S1, S2) of said motors to one another.

The first motor 3 is a motor in which the stator "S1" is internal with respect to the rotor "R1", which is arranged on the outside of said stator "S1".

The second motor 4 is a motor in which the stator "S2" is external with respect to the rotor "R2", which is arranged on the inside of said stator "S2".

In particular, each stator "S1" of said at least one first motor 3 comprises at least one housing 31, which is adapted to at least partially house at least one second motor 4. Preferably, said first motor 3 is a torque motor or a reluctance motor. In said torque motor or reluctance motor, said at least one housing 31 is a through hole.

Each one of said at least one second motor 4 has a stator "S2", which presents an external casing having, for example, a cylindrical shape and is adapted to be at least partially inserted into a housing 31, which is comprised in the stator "S1" of said at least one first motor 3.

Said fixing means 5 preferably is a flange, which is adapted to lock the stators (S1, S2) of said motors (3, 4).

In particular, said flange fixing system 5 comprises at least one plate 51, which is adapted to lock the stators (S1, S2) of at least one first motor 3 and of at least one second motor 4, and at least one arm 52, which is adapted to connect said fixing system 5 to a device, in which said propulsion system is built-in.

Said plate 51 comprises a plurality of holes 53, which are at least partially adapted to allow the plate 51 itself to be fixed to the corresponding plurality of holes 54 comprised in the stators (S1, S2) of the motors (3, 4).

Said motors (3, 4) are controlled by a control unit, which is not shown and is adapted to send the operating commands of said motors (3, 4), according to the needs, by means of communication means, such as electrical cables or radio systems, etc..

Preferably, said communication means, in particular power-supply and control cables of said at least two motors (3, 4), are arranged along said at least one arm 52 and pass through said at least one plate 51, for example by means of at least one of said holes 53.

Preferably, said at least two shafts are parallel to one another; in particular, the rotors (R1, R2) of said at least two motors (3, 4) rotate around axes that are parallel to one another.

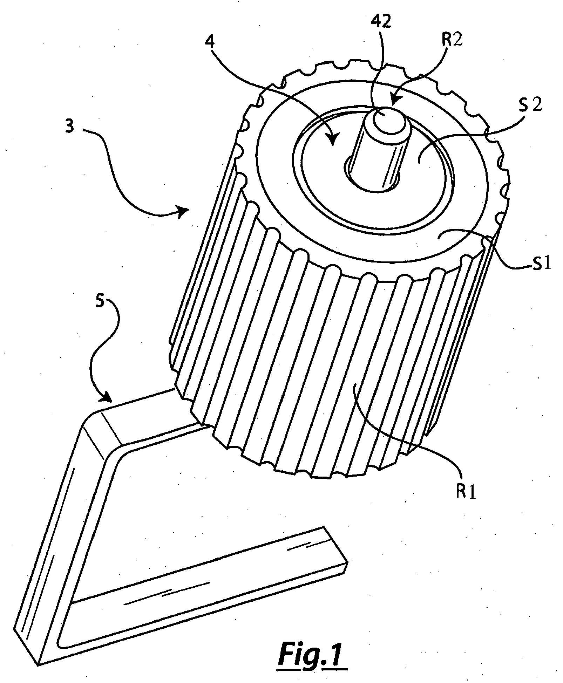

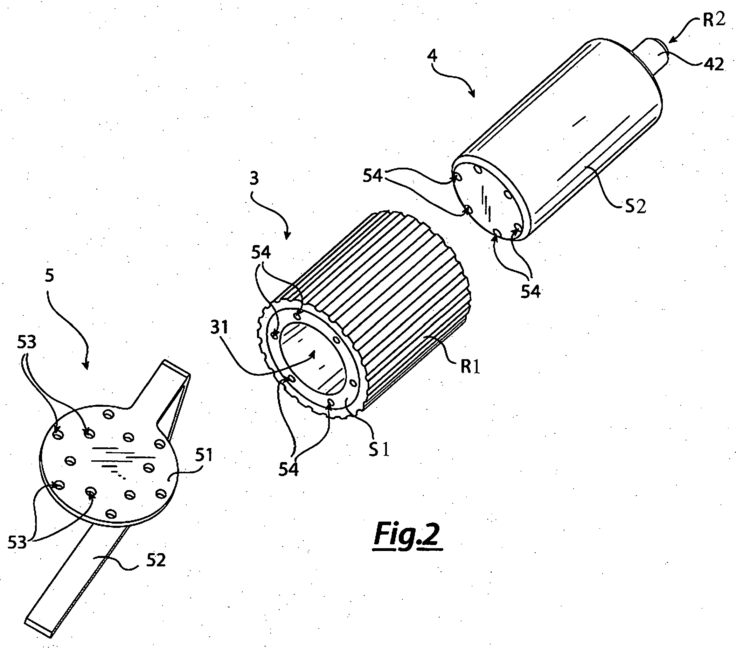

In the preferred embodiment, which is shown by way of example in figures 1 and 2, the propulsion system comprises a first motor 3, which comprises a housing 31, in particular a through hole, which is adapted to house a second motor 4. The diameter of the housing 31 is substantially equal to the external diameter of the external casing of the stator "S2" of the second motor 4.

The fixing system 5 and, in particular, the plate 51 have a circular shape with a diameter that, at the most, is equal to the maximum diameter of the stator "S1" of the first motor 3, so as not to interfere with the rotor "R1" of the first motor 3 itself.

The arm 52 is connected to the plate 51, so as not to interfere with the rotor "R1" during the rotation of the rotor of the first motor 3 itself. Preferably, said arm 52 is "Z"-shaped, so as to allow the propulsion system to be fixed to the device where said propulsion system has to be installed.

The second motor 4 has a cylindrical shape and comprises a front face, which comprises a shaft 42 of the rotor "R1", and a rear face, which is parallel to the front face. In a first embodiment, said plate 51 preferably fixes the stators (S1, S2) by fixing the rear face of the second motor 4 and the stator "S1" of the first motor 3.

In an alternative embodiment, which is not shown, a plate 51 is connected to stators (S1, S2) of the motors in correspondence to the front face of the second motor 4, where said shaft 42 is arranged.

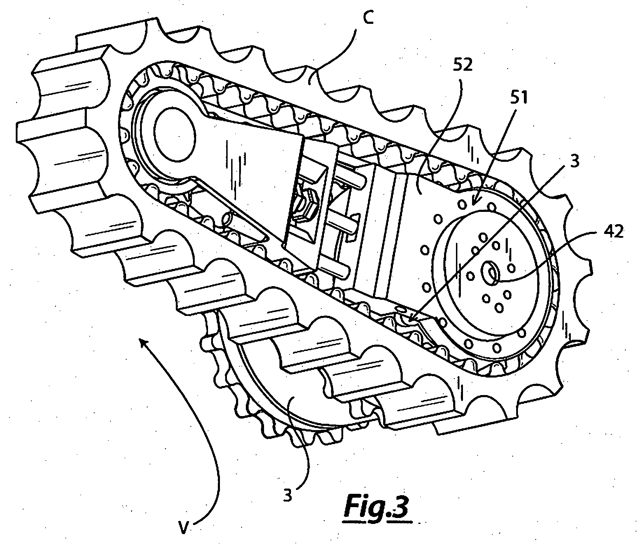

With reference to figure 3, an illustrative but nonlimiting application of said propulsion system is relative to the movement of a tracked structure of a vehicle "V", in which said propulsion system, besides causing the rotation of the track "C" in order to move the vehicle "V", is able to move the tracked structure itself so as to vary the size of the portion of the track "C" that comes in contact with the ground in order to move the vehicle "V".

As a matter of fact, the first motor 3, which has an external rotor "R1", is adapted to move the track "C", while the second motor 4, which has an internal rotor "R2", is able to.move the entire tracked structure of the vehicle "V", thus causing it to rotate around the axis of the rotor "R2" of the second motor 4 itself, preferably around the shaft 42. Said movements are controlled by the control unit, which controls and manages the two motors (3, 4) in an independent manner.

The present propulsion system can be easily built-in in the tracked structure of the vehicle "V", as shown in figure 3, by the reducing the spaces occupied with respect to the prior art.

The present solution, furthermore, allows a reduction, at least in part, of the weight, of the costs, and of the complexity of the drive means for transmitting the motion from said motors (3, 4) to the devices to be moved.

The propulsion system according to the present invention can comprise a plurality of motors (3, 4), which are properly arranged and fixed to one another, so as to obtain a compact propulsion system featuring a high power density acting on a plurality of shafts. By mere way of example, in case there are a plurality of first motors 3, said first motors 3 can be arranged coaxial to one another, thus obtaining an array of first motors 3, while said second motors 4 can be arranged in the hollow spaces between two first motors 3, properly placed in the suited housings 31.

The motors (3, 4) can be manufactured with other technologies that are normally used for manufacturing electric motors, such as brushless motors, a reluctance motors, stepper motors, synchronous motors, asynchronous motors, single-phase motors, or three-phase motors.

## Claims

1. Electric propulsion system able to drive at least two shafts, comprising
- at least two electric motors, of which at least one first motor (3) and at least one second motor (4), each one comprising a stator (S1, S2) and a rotor (R1, R2), and
- a fixing system (5), adapted to lock the stators (S1, S2) of said motors to one another;
said first motor (3) is a motor in which the stator (S1) is arranged in an inner position with respect to the rotor (R1), which is arranged on the outside of said stator (S1), and the second motor (4) is a motor in which the stator (S2) is arranged in an outer position with respect to the rotor (R2), which is arranged on the inside of said stator (S1);
the stator (S1) of the first motor (3) comprises at least one housing (31), adapted to at least partially house at least one of said at least one second motor (4) said electric propulsion system is **characterized in that**:
• said first motor (3) and said second motor (4) are distinct and independent, in which the stator (S2) of said second motor (4) presents an external casing adapted to be at least partially inserted into said housing (31);
• said housing (31) is a through hole with a diameter substantially equal to the external diameter of the external casing of the stator (S2) of the second motor (4).

2. Propulsion system according to claim 1, wherein said first motor (3) is a motor of the torque type.

3. Propulsion system according to claim 1, wherein said fixing system (5) is a flange, adapted to lock the stators (S1, S2) of said motors (3, 4).

4. Propulsion system according to claim 3, wherein said flange fixing system (5) comprises at least one plate (51), adapted to lock the stators (S1, S2) of at least one first motor (3) and of at least one second motor (4), and an arm (52), adapted to connect said fixing system (5) to a device, in which said propulsion system is built-in.

5. Propulsion system according to claim 4, wherein the power- supply and control cables of said at least two motors (3, 4) are arranged along said at least one arm (52) and pass through said at least one plate (51).

6. Propulsion system according to claim 1, wherein said at least two shafts are parallel to each other.

7. Propulsion system according to claim 6, wherein the rotors (R1, R2) of at least two motors (3, 4) rotate around axes that are parallel to each other.

## Patentansprüche

1. Elektrisches Antriebssystem, das in der Lage ist, zumindest zwei Wellen anzutreiben, umfassend:
- zumindest zwei Elektromotoren, darunter zumindest einen ersten Motor (3) und zumindest einen zweiten Motor (4), wobei jeder davon einen Stator (S1, S2) und einen Rotor (R1, R2) umfasst, und
- ein Fixierungssystem (5), das dazu ausgelegt ist, die Statoren (S1, S2) der Motoren aneinander zu sperren;
wobei der erste Motor (3) ein Motor ist, in dem der Stator (S1) in Bezug auf den Rotor (R1) an einer inneren Position angeordnet ist, und der zweite Motor (4) ein Motor ist, in dem der Stator (S2) in Bezug auf den Rotor (R2), der an der Innenseite des Stators (S1) angeordnet ist, an einer äußeren Position angeordnet ist;
wobei der Stator (S1) des ersten Motors (3) zumindest ein Gehäuse (31) umfasst, das dazu ausgelegt ist, zumindest einen des zumindest einen zweiten Motors (4) zumindest teilweise aufzunehmen,
wobei das elektrische Antriebssystem **dadurch gekennzeichnet ist, dass**
- der erste Motor (3) und der zweite Motor (4) getrennt und unabhängig sind, wobei der Stator (S2) des zweiten Motors (4) ein Außengehäuse zeigt, das dazu ausgelegt ist, zumindest teilweise in das Gehäuse (31) aufgenommen zu werden;
- das Gehäuse (31) eine Durchgangsöffnung mit einem Durchmesser ist, der dem Außendurchmesser des Außengehäuses des Stators (S2) des zweiten Motors (4) im Wesentlichen gleich ist.

2. Antriebssystem nach Anspruch 1, wobei der erste Motor (3) ein Motor vom Drehmomenttyp ist.

3. Antriebssystem nach Anspruch 1, wobei das Fixierungssystem (5) ein Flansch ist, der dazu ausgelegt ist, die Statoren (S1, S2) der Motoren (3, 4) zu sperren.

4. Antriebssystem nach Anspruch 3, wobei das Flanschfixierungssystem (5) zumindest eine Platte (51), die dazu ausgelegt ist, die Statoren (S1, S2) des zumindest einen ersten Motors (3) und des zumindest einen zweiten Motors (4) zu sperren, und einen Arm (52), der dazu ausgelegt ist, das Fixierungssystem (5) mit einer Vorrichtung, in die das Antriebssystem eingebaut ist, zu verbinden, umfasst.

5. Antriebssystem nach Anspruch 4, wobei die Stromversorgungs- und Steuerkabel der zumindest zwei Motoren (3, 4) entlang des zumindest einen Arms (52) angeordnet sind und durch die zumindest eine Platte (51) verlaufen.

6. Antriebssystem nach Anspruch 1, wobei die zumindest zwei Wellen zueinander parallel verlaufen.

7. Antriebssystem nach Anspruch 6, wobei sich die Rotoren (R1, R2) der zumindest zwei Motoren (3, 4) um Achsen drehen, die zueinander parallel verlaufen.

## Revendications

1. Système de propulsion électrique capable d'entraîner au moins deux arbres, comprenant :
- au moins deux moteurs électriques, desquels au moins un premier moteur (3) et au moins un second moteur (4) comprennent chacun un stator (S1, S2) et un rotor (R1, R2) et
- un système de fixation (5), adapté pour verrouiller les stators (S1, S2) desdits moteurs l'un à l'autre ;
ledit premier moteur (3) est un moteur dans lequel le stator (S1) est disposé dans une position intérieure par rapport au rotor (R1), qui est disposé sur l'extérieur dudit stator (S1), et le second moteur (4) est un moteur dans lequel le stator (S2) est disposé dans une position extérieure par rapport au rotor (R2), qui est disposée sur l'intérieur dudit stator (S1) ;
le stator (S1) du premier moteur (3) comprend au moins un logement (31), adapté pour renfermer au moins partiellement au moins un dudit au moins un second moteur (4),
ledit système de propulsion électrique est **caractérisé en ce que** :
- ledit premier moteur (3) et ledit second moteur (4) sont distincts et indépendants, dans lequel le stator (S2) dudit second moteur (4) présente un carter externe adapté pour être au moins partiellement inséré dans ledit logement (31);
- ledit logement (31) est un alésage traversant avec un diamètre substantiellement égal au diamètre externe du carter externe du stator (S2) du second moteur (4).

2. Système de propulsion selon la revendication 1, dans lequel ledit premier moteur (3) est un moteur du type à couple.

3. Système de propulsion selon la revendication 1, dans lequel ledit système de fixation (5) est une bride, adaptée pour verrouiller les stators (S1, S2) desdits moteurs (3, 4).

4. Système de propulsion selon la revendication 3, dans lequel ledit système de fixation (5) par bride comprend au moins une plaque (51) adaptée pour verrouiller les stators (S1, S2) d'au moins un premier moteur (3) et d'au moins un second moteur (4) et un bras (52) adapté pour raccorder ledit système de fixation (5) à un dispositif, dans lequel ledit système de propulsion est intégré.

5. Système de propulsion selon la revendication 4, dans lequel les câbles de commande et d'alimentation électrique desdits au moins deux moteurs (3, 4) sont disposés le long d'au moins un bras (52) et passent à travers au moins une plaque (51).

6. Système de propulsion selon la revendication 1, dans lequel lesdits au moins deux arbres sont parallèles l'un à l'autre.

7. Système de propulsion selon la revendication 6, dans lequel les rotors (R1, R2) d'au moins deux moteurs (3, 4) tournent autour d'axes qui sont parallèles l'un à l'autre.
